(19) Europäisches Patentamt
European Patent Office
Office européen des brevets

(11) **EP 4 685 460 B1**

(12) **EUROPEAN PATENT SPECIFICATION**

(45) Date of publication and mention
of the grant of the patent:
**24.06.2026 Bulletin 2026/26**

(21) Application number: **24190144.6**

(22) Date of filing: **22.07.2024**

(51) International Patent Classification (IPC):
**G01N 15/0205** (2024.01)   **G01N 15/10** (2024.01)
**G01N 15/14** (2024.01)   **G01N 21/53** (2006.01)
**G01N 15/00** (2024.01)   **G01N 15/02** (2024.01)
**G01N 21/47** (2006.01)

(52) Cooperative Patent Classification (CPC):
**G01N 15/0211; G01N 21/51; G01N 21/53;**
G01N 2015/0053; G01N 2015/0222;
G01N 2015/0294; G01N 2021/4792

(54) **DEVICE FOR ANALYZING SAMPLE PARTICLES, AND METHOD**

VORRICHTUNG ZUR ANALYSE VON PROBENPARTIKELN UND VERFAHREN

DISPOSITIF D'ANALYSE DE PARTICULES D'ÉCHANTILLON ET PROCÉDÉ

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**28.01.2026 Bulletin 2026/05**

(73) Proprietor: **Anton Paar GmbH
8054 Graz (AT)**

(72) Inventors:
• **Balog, Sandor
1700 Freiburg (CH)**
• **Grabenwarter, Lukas
8041 Graz (AT)**
• **Moitzi, Christian
8074 Raaba-Grambach (AT)**

(74) Representative: **Dilg, Haeusler, Schindelmann
Patentanwaltsgesellschaft mbH
Leonrodstraße 58
80636 München (DE)**

(56) References cited:
EP-B1- 3 523 629   WO-A2-2009/073259
CN-A- 110 927 025   CN-B- 108 957 474
US-A1- 2007 030 492

• **PALMER A J: "RADIATION-INDUCED
ORIENTATION OF ATMOSPHERIC AEROSOLS",
JOURNAL OF THE OPTICAL SOCIETY OF
AMERICA A, OPTICAL SOCIETY OF AMERICA,
vol. 8, no. 2, 1 February 1991 (1991-02-01), pages
366 - 369, XP000175125, ISSN: 1084-7529**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Field of the Invention

The invention relates to a device for analyzing particles of a sample, the device comprising: an electromagnetic radiation source to illuminate the sample with electromagnetic radiation to thereby generate a scattered signal, a detector to detect a first component and a second component of the scattered signal, and a control device configured to determine the depolarization ratio of the sample based on the detected first component and the detected second component, calculate a polarizability associated with the sample, and determine a shape characteristic of the sample particles based on the depolarization ratio and polarizability.

The invention may hence relate to the technical field of analyzing sample particles, in particular using dynamic light scattering.

Technical Background

A plurality of measurement methods are known for analyzing a sample that contains a large number of particles (sample particles), in particular present in a solvent. For example, dynamic light scattering (DLS) is a well-established method for sizing particles, in particular in the nanometer size range. However, usually, no shape information of the particles can be obtained in this manner.

The primary information obtained by DLS is the translational diffusion coefficient, which is interpreted as the rate of the translational Brownian motion, and which is inversely proportional to the particle diameter. If the particles are not spherical, in addition to the translational diffusion their rotational diffusion can be detected and characterized. The scattering signal is affected by rotational Brownian motion when the particles are optically and geometrically anisotropic.

Different methods are known which make use of this information and give access to the rotational diffusion coefficient and on this basis to geometrical parameters of the particles, like for example the aspect ratio. However, known approaches either require the measurement of the depolarized signal at multiple different scattering angles (depolarized dynamic light scattering, DDLS) or are mathematically ill-posed because different, potentially overlapping, decays have to be fitted to one correlation function. Further, known approaches refer to an under-determined system, as there are fewer independent 'equations' available than variables.

US 10,520,431 B2 describes a particle analyzer intended to obtain an aspect ratio and a major axis length or a minor axis length of particles being dispersed in a dispersion medium. However, in order to determine the aspect ratio, the method according to this document requires references for the same particle sample, which have to be determined experimentally: according to sections [0044] and [0045] of this document, the first relationship information storage section M1 stores therein first relationship information data indicating a relationship between the polarization relationship value ($I_{VH}/I_{ISO}$) and an aspect ratio. The first relationship information data are obtainable in advance by using a standard particle having a known aspect ratio, and are data of a relational expression (calibration curve) indicating a relationship between the polarization relationship value ($I_{VH}/I_{ISO}$) and the aspect ratio.

CN110927025A refers to a system for aerosol monitoring for biological and non-biological applications. Scattered light is filtered after polarization and fluorescence is also filtered, whereby the fluorescence provides additional information.

In other words, experimentally determined reference data associated with the sample have to be provided in advance; thereby requiring additional effort and cost. Moreover, reference materials with a known aspect ratio are commercially available for only a few materials (e.g., gold nanorods). This makes it practically impossible to experimentally determine the relationship between aspect ratio and depolarization ratio for most sample materials.

Summary of the Invention

There may be a need to analyse sample particles in an efficient and reliable manner.

A device and a method are described in the following.

According to an aspect of the invention, there is described a device (e.g. a DLS apparatus) for analyzing particles of a sample (in particular particles in a solution, such as a dispersion or a suspension), the device comprising:

  i) an electromagnetic radiation source (e.g. a light source, a lamp, a laser) to illuminate the sample with electromagnetic radiation to thereby generate a scattered signal.

  ii) a detector to detect a first component (in particular a horizontally polarized component) (in particular an intensity) of the scattered signal, and a second component (in particular a vertically polarized component) (in particular an intensity) of the scattered signal.

  iii) a control device (e.g. a processor, a hardware/software, a control system (of a DLS apparatus); being at least partially integrated in the device and/or operating at least partially remote), configured to:

> a) determine/calculate (derive, provide) the depolarization ratio (in particular the intensity of the first component divided through the intensity of the second component) of the sample based on the detected first component and the detected second component.
> b) calculate (derive, provide) (elements/components of) a polarizability (tensor) (for example using at least one material constant such as the refractive index and/or the dielectric constant) associated with the sample.
> c) determine a shape characteristic (for example the aspect ratio) of the sample particles based on the depolarization ratio and the polarizability (e.g. using a shape characteristic determination curve).

According to a further aspect of the invention, there is described a method of analyzing sample particles, in particular particles in a solvent, the method comprising:

> i) illuminating the sample with electromagnetic radiation, thereby generating a scattered signal;
> ii) detecting a first component of the scattered signal;
> iii) detecting a second component of the scattered signal;
> iv) determining/calculating the depolarization ratio of the sample based on the detected second component and the detected first component;
> v) calculating a polarizability associated with the sample, and
> vi) determining a shape characteristic of the sample particles based on the depolarization ratio and the polarizability.

According to a further aspect of the invention, there is described a use of (depolarized) dynamic light scattering to determine a shape characteristic, in particular an aspect ratio, of sample particles based on a scattering signal and at least one material constant associated with the sample (the latter may be used to calculate the polarizability) as input, in particular free of experimentally determined reference data associated with the sample.

In the present context, the term "polarizability" may in particular refer to the ability of an atom, molecule, or a material to form an induced dipole moment in response to an external electric field. In other words, polarizability may express of how easily the electron cloud around the nucleus of an atom/molecule/material can be distorted by an electric field. In anisotropic materials, the polarizability can be anisotropic as well. The polarizability depends on parameters (material constants) such as the dielectric constant, the refractive index and absorption index.

To (mathematically) describe the polarizability, a "polarizability tensor" may be used. This polarizability can be a tensor that may be zero-dimensional, one-dimensional, two-dimensional or of higher order dimensions. Depending on the dimension, the (polarizability) tensor can be seen as equivalent to a scalar, a vector or a matrix. In comparison to scalar polarizability, a higher-order polarizability tensor provides a directionally dependent description of the polarizability. In an example, the polarizability tensor a may be described as

$$\vec{p} = \alpha\, \vec{E},$$

wherein p is the induced dipole moment and E is the applied electric field. In an embodiment, the polarizability can be calculated as a symmetric second order tensor, in particular a 3x3 matrix, wherein the diagonal elements of the matrix are the polarizabilities along the principal axes.

In the present context, the term "dynamic light scattering (DLS)" may in particular refer to an analytical technique used to measure the size distribution of particles in a solution. suspension or polymers in solution. For this purpose, the sample can be illuminated with electromagnetic radiation (in particular light) from an electromagnetic radiation source and the scattered electromagnetic radiation may be measured by a detector. In a preferred example, the electromagnetic radiation to illuminate the sample is spatially and/or temporally coherent and/or polarized. Thus, for example, there may be measured a horizontally polarized component and a vertically polarized component of the scattered electromagnetic radiation. DLS may be further used to analyse the fluctuations in the intensity of light scattered by the particles as they undergo Brownian motion in a solution. These fluctuations may be related to the particle size. In a specific variant, being termed depolarized DLS (DDLS), the scattered electromagnetic radiation may be measured perpendicular to the polarization plane of the incident electromagnetic radiation, i.e. the depolarized component is investigated.

In the present context, the term "shape characteristic" may in particular refer to a property of the sample particles. In an example, the shape characteristic is to be understood as an average shape characteristic of the sample particles. In an example, the shape characteristic may comprise an aspect ratio. In further examples, the shape characteristic may comprise an aspect ratio or an ellipse ratio or an irregularity or an elongation or a circularity or a compactness or an extent.

According to an exemplary embodiment, the invention may be based on the idea that sample particles can be analysed in an efficient and reliable manner, when a shape characteristic of the sample particles is determined based on an experimentally measured depolarization ratio and theoretically calculated elements of a polarizability associated with the sample particles. While the depolarization ratio may be determined in a straightforward manner using established technologies such as dynamics light scattering, the polarizability may be determined (purely) theoretically based on (literature) known parameters such as the dielectric constants of particle material and solvent (additionally or alternatively, the refractive index and/or the absorption index of the particle material and solvent can be used, since the refractive index and/or the absorption index can be derived from the dielectric constant and vice versa).

Conventionally, investigating shape characteristics such as the aspect ratio, when using DLS, requires experimentally determined reference data with respect to the sample to be investigated. This generates additional cost, efforts, and time requirements.

It has now been surprisingly found by the inventors that shape characteristics can be determined in a straightforward manner by combining the measured depolarization ratio with a polarizability that can be estimated purely based on already available parameters such as material constants. As a consequence, cost, efforts, and time can be saved, while keeping the accuracy of the shape characteristic determination constant.

Exemplary Embodiments

In an embodiment, the control device is further configured to assume (e.g. experimentally or based on experience) a shape model of the sample particles, in particular an oblate shape or a prolate shape. In the present context, the term "oblate" may refer to a spheroid, wherein an ellipse has been rotated around its minor axis ("lentil" shape). Further, in the present context, the term "prolate" may refer to a spheroid, wherein an ellipse has been rotated around its major axis ("rugby ball" shape). This may provide the advantage that the quality of the shape characteristic determination can be increased. In an example, the shape model is (essentially) already known to the user. In another example, the shape model is experimentally determined, e.g. by transmission electron microscopy (TEM). In the present context, spheroids are mentioned for the shape model. Nevertheless, comparable equations/relationships may be derived for other kinds of shapes.

In an example, the described approach may not provide an information with respect to the particles being oblate or prolate spheroids. Accordingly, there may be two different solutions available. Estimating the shape model of the particles to be rather oblate or prolate may guide the determination of the shape characteristic in the right direction. The exemplary embodiments of the invention are related to spheroids, however, the invention is not limited to spheroids only but can also be applied to other kinds of shapes, by deriving equations for other shapes, relationships between the depolarization ratio and the polarizability can be established and used to apply the invention to other shapes.

In an embodiment, the first component and the second component are detected from the same angle. Thereby, a simple and cost-efficient design can be chosen. In an embodiment, the first component and the second component are detected from different angles. In this manner, the detectors and the polarizing optics can be permanently fixed, eliminating the need for movable, rotatable or exchangeable polarizing optics and/or filters.

In an embodiment, the polarizability (a) is calculated based on at least one material constant of the sample (particles and/or solvent). In an embodiment, the material constant comprises a refractive index of the sample and/or an absorption index of the sample and/or a dielectric constant of the sample (of the particles and/or the solvent). It has been found by the inventors that the polarizability may be calculated in an efficient and easy, yet reliable, manner solely based on known material constants (from the literature). While in one example, the dielectric constant(s) may be used, additionally or alternatively, the refractive index and/or the absorption index of the particle material and/or solvent can be used (since the refractive index and/or the absorption index may be derived from the dielectric constant and vice versa).

In an embodiment, the polarizability comprises a polarizability tensor. In an example, the polarizability tensor has a dimensionality. In a further example, the polarizability tensor comprises a dimensionality of 0 or higher, in particular 1 or higher, more in particular, 2 or higher.

In an embodiment, the determination of the shape characteristic is free of a reference measurement, in particular free of experimentally determined reference data associated with the sample and/or free of a reference sample. In a further embodiment, the determination of the shape characteristic is calibration-free and/or quantitative. While prior art examples require experimentally determined reference data of the sample particles to determine the aspect ratio, the described approach uses a theoretical estimation of the polarizability, thereby saving time and efforts without lowering the accuracy.

Moreover, the described approach may allow the application of a much broader variety of samples, as no reference materials with known characteristics are needed. These reference materials are commercially available for only a few materials (e.g., gold nanorods), making it practically impossible to experimentally determine the relationship between aspect ratio and depolarization ratio for most sample materials.

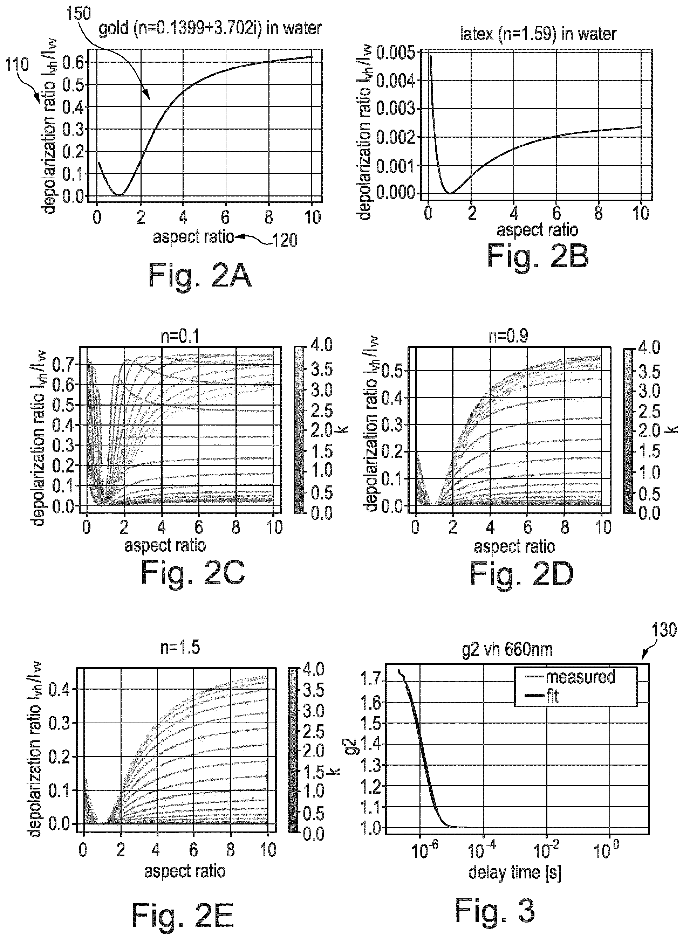

In an embodiment, determination of the shape characteristic comprises: calculate a shape characteristic determination curve. In an embodiment, determination of the shape characteristic comprises: correlate the calculated depolarization ratio with the shape characteristic determination curve (see for example the detailed description for Figure 3). Based on the determined polarizability (using the material constant(s)), a shape characteristic curve may be determined, which can then be used to determine the shape characteristic such as the aspect ratio (compare Figures 2A to 2E).

In an embodiment, calculation of the shape characteristic determination curve is done analytically based on a theoretical model, in particular free of experimental reference data. Thereby, efforts and time may be saved and making this described approach applicable for much wider range of samples as reference particles are commercially available for only a few materials (e.g., gold nanorods).

The calculation of the polarizability of a spheroid from the optical properties is for example described in Bohren and Huffman (Wiley, 1983) eq. 5.32ff. The calculation of the depolarization ratio from the polarizability is for example described in van de Hulst (Dover Publications, 1981) eq. 6.52.

According to the invention, the control device is configured to: determine a size characteristic, in particular a (average) length, of the sample particles based on the determined shape characteristic. The shape characteristic may not only be used as an important parameter to describe the sample particles but may further serve as a basis for the determination of further particle characteristics such as the length.

In an embodiment, the determination of the size characteristic (e.g. length) comprises: measure a polarization selective statistical property of the scattered signal (from the sample). In an embodiment, a depolarized autocorrelation function ($g_{vh}$), in particular using depolarized dynamic light scattering, may be used for the size characteristic determination. In another embodiment, a frequency analysis by fitting the power spectrum may be used for the size characteristic determination. Thereby, established and reliable methods may be directly applied.

In an embodiment, the determination of the size characteristic (e.g. length) is based (exclusively) on the first component (vh, horizontal component). While conventionally, the horizontal and the vertical component are applied (in particular for the depolarized autocorrelation function), it has been surprisingly found by the inventors that the first component is actually sufficient. This comes as a surprise in light of the prior art teachings. Due to the complexity of calculations regarding the vertical component, calculations (solely) based on the horizontal component may be not even easier but also more reliable.

In an embodiment, the determination of the size characteristic (e.g. length) further comprises: determining a coherence time of the intensity fluctuations of the scattered signal, in particular fitting a decay rate ($\Gamma$) based on the measured depolarized correlation function ($g_{vh}$). In an embodiment, the determination of the size characteristic is based on at least one of the following: the fitted decay rate ($\Gamma$), the determined shape characteristic (e.g. aspect ratio), a hydrodynamic diffusion model (e.g. Stokes-Einstein equation for spheres, Perrin model for spheroids), and a viscosity of a sample solvent. Thus, the size characteristic may be determined in an efficient and reliable manner, using established approaches and (easily) available input data.

According to the invention, the device is (at least partially) configured as a dynamic light scattering (DLS) device.

In an embodiment, the shape characteristic comprises an aspect ratio. The aspect ratio can be an important parameter for characterizing the sample particle shape. Further, the aspect ratio may be used as a base to calculate the length of the particles.

In an embodiment, the sample particles are arranged/present in a solvent (for example water). The particles can be present in the solvent as a dispersion or a suspension or a colloidal solution. Thereby, a movement of the particles is enabled for a DLS measurement, in particular this movement may be Brownian motion and/or diffusion.

In an embodiment, the device is configured to determine a first intensity (Ivh) of the first component, in particular wherein the first intensity is a mean of the intensity of the first component. In an embodiment, the device is configured to determine a second intensity (Ivv) of the second component, in particular wherein the second intensity (Ivv) is a mean of the intensity of the second component. In a preferred example, the mean is the temporal mean (mean with respect to time; mean over a specific time period). The mean can be for example between 1 $\mu$s and 10 seconds. Nevertheless, the mean can also be longer or, if technically possible, shorter.

In an embodiment, the first component is polarized along a first polarization direction. In an embodiment, the second component is polarized along a second polarization direction. In an embodiment, the second polarization direction and the first polarization direction are arranged with respect to each other in an angle of 45° or more, in particular (essentially) 90°. The first component can be horizontally polarized, and the second component can be vertically polarized, so that the components can be orthogonal to each other. Yet, other angles are possible as well.

In an embodiment, the electromagnetic radiation is coherent and/or polarized. Thereby, efficiency may be highly increased. In an embodiment, an incident polarization direction of the electromagnetic radiation and the second polarization direction have a fixed relationship. These polarization directions can be parallel, but can also have different orientations, e.g. using a polarizing filter.

In an embodiment, polarizability (a) is described by a tensor which is anisotropic. For example, there may be a parallel component and an orthogonal component (two perpendicular components). There can also be three different (orthogonal) components, since the particle is three-dimensional, or the coordinate system may be defined in a non-orthogonal manner.

In an exemplary embodiment, the method comprises the following steps:

i) Calculation of the depolarization ratio from measurements of horizontally and vertically polarized component of scattering signal.

ii) Calculation of the aspect ratio from depolarized static light scattering and optical properties of particle material and solvent. Furthermore, an assumption regarding the shape model (oblate or prolate) is preferred.

iii) Calculation of the particle length from depolarized dynamic light scattering. The experimental input is the decay rate of the depolarized correlation function. Furthermore, a diffusion model, the solvent viscosity and temperature can be used.

In an exemplary embodiment, the device comprises at least one of the following features:

i) A coherent and linearly polarized light source to illuminate the sample.

ii) Detection of the vv component of the scattering signal at one scattering angle.

iii) Detection of the vh component of the scattering signal at the same angle.

iv) An integrator which calculates the mean of the detected intensity over the whole measurement duration.

v) A correlator which calculates the intensity-autocorrelation function from the detected signal from its time dependence.

Dynamic Light Scattering DLS is a well-established method for sizing particles in the nanometer size range. Usually, no shape information of the particles can be obtained. The methods primary information is the translational diffusion coefficient, which is interpreted as the rate of the translational Brownian motion and which is inversely proportional to the particle diameter.

If the particles are not spherical, the rotational diffusion in addition to the translational diffusion can be detected and characterized. The scattering signal is affected by rotational Brownian motion when the particles are optically and geometrically anisotropic. Different methods are known from literature which make use of this information and give access to the rotational diffusion coefficient and on this basis to geometrical parameters of the particles, like for example the aspect ratio. They either require the measurement of the depolarized signal at different scattering angles (classical Depolarized Dynamic Light Scattering DDLS) or are mathematically ill-posed because different, potentially overlapping, decays have to fitted to one correlation function.

In an embodiment, a new approach is presented which is mathematically robust (only one single decay has to be fitted) and requires data from one single scattering only. With these improvements, one may provide a simple and robust access to shape information with a relatively simple DLS instrument (e.g. no measurements at multiple angles required). This approach can, therefore, be used by non-expert users and can give an average aspect ratio of the particles in addition to the size distribution function from standard DLS.

In an example, the theoretical background may be summarized as follows: an ensemble of optically isotropic, which may be spherical particles, all sharing the same diffusion coefficient for their Brownian motion in a dispersant (i.e. a monodisperse sample), leads to a field autocorrelation function of the form $g_{(\tau)} = \exp(-q^2 D\tau)$.

If the incident laser light is linearly polarized in a certain direction, then so is the scattered light, because optically isotropic spheres do not depolarize light during scattering.

For optically anisotropic particles, which may be non-spherical particles, the situation is more complicated. In addition to translational diffusion, they have observable rotational diffusion modes with a rotational diffusion coefficient $D_r$ which also lead to fluctuations of the scattering pattern. Furthermore, they can depolarize the light during scattering. The field correlation functions for an ensemble of identical, non-spherical particles for vertically polarized incident light are

$$g_{vv(\tau)} = A \exp(-q^2 D_t \tau) + B \exp(-[q^2 D_t + 6D_r]\tau)$$

$$g_{vh(\tau)} = \exp(-[q^2 D_t + 6D_r]\tau)$$

where $D_t$ and $D_r$ are the translational and rotational diffusion coefficients and A and B are coefficients that depend on the shape and optical properties of the particle.

A vertical polarization filter can thus not suppress the contribution from rotational diffusion, but a horizontal polarizer can remove the purely translational part. The remaining correlation function then corresponds to a mixture of translational and rotational diffusion, i.e. the rotational diffusion coefficient cannot be read off directly from the measurement with a horizontal polarizer.

When measuring non-spherical particles without a polarization filter in the detection path, the detected light scattered from the sample contains the horizontally and vertically polarized components. However, orthogonally polarized light cannot interfere, and therefore, the intercept of the correlation function decreases.

Brief Description of the Drawings

The aspects defined above and further aspects of the invention are apparent from the examples of embodiment to be described hereinafter and are explained with reference to these examples of embodiment.

Figure 1 shows a method of analysing sample particles, according to an exemplary embodiment of the invention.
Figures 2A to 2E show the relation between the depolarization ratio and the aspect ratio for different polarizabilities, according to exemplary embodiments of the invention.
Figure 3 shows a correlation of the delay time, according to an exemplary embodiment of the invention.
Figure 4 shows a device for analysing sample particles, according to an exemplary embodiment of the invention.

Detailed Description of the Drawings

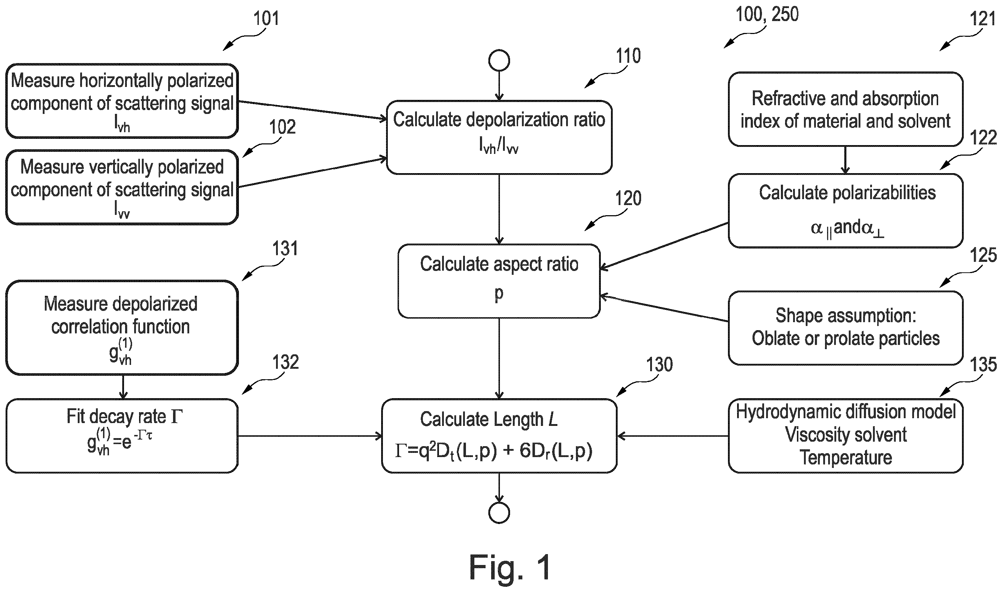

**Figure 1** shows a method of analysing sample particles, according to an exemplary embodiment of the invention. In the first place, the sample (comprising particles in a solution) is illuminated by a light source and the scattered light is then detected (principle of DLS).
Step 101: as a first component Ivh, the intensity of the horizontally polarized component of the scattered signal, is measured.
Step 102: as a second component Ivv, the intensity of the vertically polarized component of the scattered signal, is measured.
Step 110: the depolarization ratio Ivh/Ivv of the sample is calculated based on the detected first component Ivh and the detected second component Ivv. Hereby, the measured intensity I can be a (temporal) mean.
Step 121: known values of the dielectric constant regarding the particle material and the solvent are taken from the literature.
Step 122: components of the polarizability $\alpha_{paralle}$, and $\alpha_{perpendicular}$ are calculated based on the dielectric constant. The calculation of the polarizability of a spheroid from the optical properties is described for example in Bohren and Huffman (Wiley, 1983) eq. 5.32ff.
For particles with one rotational symmetry axis, such as spheroids or cylinders, there are two distinct axes with polarizabilities $\alpha_\perp$ (perpendicular to the symmetry axis) and $\alpha_\parallel$ (parallel to the symmetry axis). In the Rayleigh limit (particles smaller than the wavelength, electrostatic approximation), the polarizability of a spheroid can be approximated by:

$$\alpha_j = V \frac{\epsilon_p - \epsilon_m}{\epsilon_m + L_j(\epsilon_p - \epsilon_m)}$$

where $V$ is the volume of the ellipsoid, $\varepsilon_p$ and $\varepsilon_m$ are the dielectric constants of the particle and the surrounding medium, respectively, and $L_j$ are geometrical factors. For a prolate spheroid, these are given by

$$L_\parallel = \frac{1 - e^2}{e^2}\left(\frac{1}{2e}\log\frac{1 + e}{1 - e} - 1\right)$$

$$L_\perp = \frac{1}{2}(1 - L_\parallel)$$

where

$$e^2 = 1 - \frac{a^2}{c^2}$$

is the eccentricity of the spheroid (here, the definition is used that c is the half axis in the direction of the symmetry axis, i.e. the longer axis for a prolate spheroid and the shorter axis for an oblate one). For an oblate spheroid

$$L_\perp = \frac{g(e)}{2e^2}\left(\frac{\pi}{2}\tan^{-1} g(e)\right) - \frac{g(e)^2}{2}$$

$$L_\parallel = 1 - 2L_\perp$$

where

$$g(e) = \sqrt{\frac{1 - e^2}{e^2}}$$

and

$$e^2 = 1 - \frac{c^2}{a^2}$$

The symbols ∥ (parallel) and ⊥ (perpendicular) are meant with respect to the symmetry axis of the spheroid and the second equation of each set above results from the fact that the sum of the geometrical factors for all three axes must be 1.

Step 125: the shape model of the particles is assumed/estimated/measured to be oblate or prolate.

In order to calculate (determine) a shape characteristic (here aspect ratio p) of the sample particles, the following parameters are provided:

    i) the calculated depolarization ratio Ivh/Ivv from step 110,
    ii) the calculated components of the polarizability $\alpha_{parallel}$ and $\alpha_{perpendicular}$ from step 122, and
    iii) the assumption that the particles are oblate or prolate from step 125.

In this manner, a shape characteristic such as the aspect ratio can be determined in a straightforward and reliable manner. The aspect ratio p can be further used to calculate a size characteristic such as the average length L of the particles in the sample.

Step 131: using depolarized DLS, the depolarized correlation function $g_{vh}$ is measured.

Step 132: based on $g_{vh}$, the decay rate Γ can be fitted (see also Figure 3):

$$g_{vh} = e^{-\Gamma t}.$$

Step 135: as additional inputs, the following known parameters are provided: a hydrodynamic diffusion model, the viscosity of the solvent, and the temperature.

It should be noticed that in steps 131 and 132, only the horizontally polarized component vh is used for the calculation. Calculating vh is less complex and less error-prone than calculating vv. It has been surprisingly found by the inventors that calculation of vh can be sufficient for a reliable calculation of the length L. Thereby, efforts can be saved while the reliability can be improved.

Finally, the average length L of the sample parameters can be calculated based on:

    i) the aspect ratio p of step 120,
    ii) the decay rate Γ of step 132, and
    iii) the known parameters from step 135.

**Figures 2A to 2E** show the relation between the depolarization ratio and the aspect ratio for different polarizabilities, according to exemplary embodiments of the invention. If the depolarization ratio and the (function of the) polarizability is known, the aspect ratio (as a shape characteristic) can be determined. It can be seen that for the aspect ratio of 1 (round particle), the depolarization ratio is always 0.

Apart from the form factor, which is approximately 1 for small particles, the depolarization ratio for rotationally symmetric particles (e.g. rods or disks) only depends on the polarizabilities ($\alpha_\parallel$ $\alpha_{parallel}$ and $\alpha_\perp$ $\alpha_{perpendicular}$). For spheroids, these in turn are functions of the dielectric constants of the particles and the surrounding medium and of the aspect ratio. This means that the aspect ratio can be calculated from the depolarization ratio if the material constant (e.g. dielectric constant) (i.e. the optical properties) of sample (particles and dispersant) are known.

**Figure 2A** shows the depolarization ratio for gold spheroids dispersed in water and **Figure 2B** shows latex spheroids dispersed in water at a wavelength of 660 nm. Two things are noticeable in the plots:

i) Two solutions are provided by the present disclosure, both for a prolate and oblate shape. A pre-assumption can be done, giving then one solution.

ii) For latex, the depolarization ratio is extremely small regardless of the aspect ratio. This is due to the similar polarizability in both directions, which most likely has to do with the limited mobility of the electrons in a dielectric material.

In **Figures 2C to 2E,** the calculated depolarization ratios are shown for several values of the dielectric function. Specifically, the depolarization ratio of small, spheroidal particles dispersed in water (n=1.33) for various values of the complex refractive index n+ik are shown. For certain values, there are even four solutions (two prolate and two oblate) for some depolarization ratios. For all transparent materials (small imaginary part of the refractive index), there is no significant depolarization. This restriction also applies to other methods for shape analysis with DLS, because if the vh intensity is too low, no information can be obtained from this measurement.

**Figure 3** shows an intensity autocorrelation fit for a vh setup, according to an exemplary embodiment of the invention. The depolarized (vh) DLS signal is used to estimate the length using the aspect ratio p, which is already known from the steps of Figures 2A to 2E above. Once the aspect ratio is known, the length L can be estimated from the vh decay rate $\Gamma$ using one of the diffusion models known from literature. For the vh measurement, the decay rate is given by

$$\Gamma = q^2 D_t + 6D_r$$

and the diffusion models give expressions for $D_t (L, p)$ and $D_r (L, p)$, where L is the particle length and p is the aspect ratio.

Hence, for a known aspect ratio, the length can be calculated by solving

$$\Gamma_{vh} = q^2 D_t (L, p) + 6D_r (L, p)$$

for the length L.

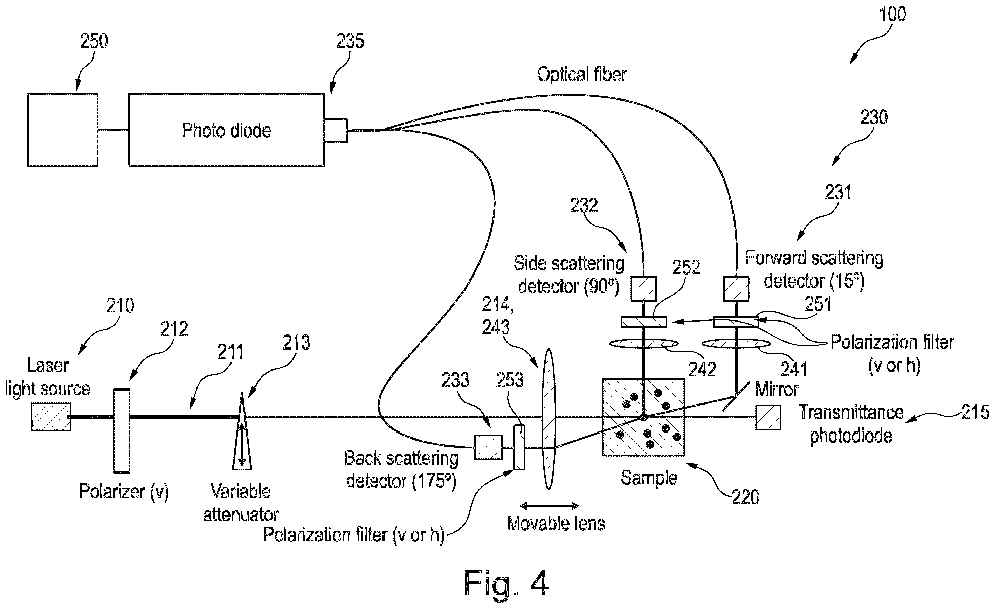

**Figure** 4 shows a device 100 for analysing sample particles, according to an exemplary embodiment of the invention. The device 100 comprises an electromagnetic radiation source 210 (here a laser light source) to illuminate a sample 220 with an electromagnetic radiation beam 211 to thereby generate a scattered signal. Before entering the sample 220, the electromagnetic radiation beam 211 is send through a first polarizer 212 (here vertical polarizer), a variable attenuator 213, and a movable lens 214. Transmitted electromagnetic radiation can be detected by a transmittance photodiode 215.

The device 100 further comprises a detector 230 for detecting the scattered signal, wherein the detector 230 has three detector parts: a forward scattering detector 231, a side scattering detector 232, and a back scattering detector 233. In front of each detector 230, there is arranged respectively a lens 241, 242, 243, and a second polarization filter (here horizontal and vertical polarization) 251, 252, 253. Said detector parts 231, 232, 233 are coupled (here by respective optical fibers) to a photo diode 235, eventually also forming part of the detector 230.

The detector 230 is configured to detect a first component Ivh of the scattered signal, and a second component Ivv of the scattered signal. It is schematically shown that the detector 230 is coupled to a control device 250 which is configured to determine the depolarization ratio Ivh/Ivv of the sample 220 based on the detected first component Ivv and the detected second component Ivh, calculate a polarizability associated with the sample 220, and determine a shape characteristic of the sample particles based on the depolarization ratio Ivh/Ivv and the polarizability.

## Claims

1.    A device (100), configured as a dynamic light scattering device, for analyzing particles of a sample (220), the device (100) comprising:

an electromagnetic radiation source (210) to illuminate the sample (220) with electromagnetic radiation (211) to thereby generate a scattered signal;
a detector (230) to detect

a first component (Ivh) of the scattered signal (101), and
a second component (Ivv) of the scattered signal (102); and

a control device (250) configured to:

determine (110) the depolarization ratio (Ivh/Ivv) of the sample (220) based on the detected first component (Ivv) and the detected second component (Ivh);

calculate (122) a polarizability (a) associated with the sample (220);

determine (120) a shape characteristic (p) of the sample particles based on the depolarization ratio (Ivh/Ivv) and the polarizability (a); and

determine (130) a size characteristic being a length (L) of the sample particles based on the determined shape characteristic (p).

2. The device (100) according to claim 1, wherein the control device (250) is further configured to:

assume (125) a shape model of the sample particles, in particular an oblate shape or a prolate shape.

3. The device (100) according to one of the preceding claims,
wherein the first component (Ivv) and the second component (Ivh) are detected from the same angle or from different angles.

4. The device (100) according to one of the preceding claims,
wherein the polarizability (a) is calculated based on a material constant of the sample, in particular at least one of a refractive index of the sample, an absorption index of the sample, a dielectric constant of the sample, in particular of the sample particles and/or the solvent.

5. The device (100) according to one of the preceding claims,

wherein the polarizability ($\alpha$) comprises a polarizability tensor, in particular
wherein the polarizability tensor has a dimensionality, more in particular
wherein said dimensionality is 0 or higher, in particular 1 or higher, more in particular 2 or higher.

6. The device (100) according to one of the preceding claims,
wherein the determination (120) of the shape characteristic (p) is free of a reference measurement, in particular free of experimentally determined reference data associated with the sample and/or free of a reference sample.

7. The device (100) according to one of the preceding claims, wherein determination (120) of the shape characteristic (p) comprises:

calculate a shape characteristic determination curve (150), and
correlate the calculated depolarization ratio (Ivh/Ivv) with the shape characteristic determination curve (150).

8. The device (100) according to claim 7,
wherein calculation of the shape characteristic determination curve (150) is done analytically based on a theoretical model, in particular free of experimental reference data.

9. The device (100) according to one of the preceding claims, wherein the determination (130) of the size characteristic comprises:
measure (131) a polarization selective statistical property of the scattered signal ($g_{vh}$), in particular using depolarized dynamic light scattering, of the first component (Ivh), in particular exclusively of the first component (Ivh);

in particular
wherein the determination (130) of the size characteristic further comprises:
determining a coherence time of the intensity fluctuations of the scattered signal,
in particular fitting (132) a decay rate ($\Gamma$) based on the measured polarization selective statistical property, in particular the depolarized correlation function (gvh).

10. The device (100) according to one of the preceding claims,
wherein the determination (130) of the size characteristic is based on at least one of: the fitted decay rate ($\Gamma$), the determined shape characteristic (p), a hydrodynamic diffusion model, a viscosity of a sample solvent.

11. The device (100) according to one of the preceding claims, further comprising at least one of the following features:

wherein the shape characteristic comprises an aspect ratio;

wherein the sample particles are arranged in a solvent, in particular in a dispersion or a suspension;

wherein the device is configured to determine a first intensity (Ivh) of the first component, in particular where the first intensity is a mean of the intensity of the first component;

wherein the device is configured to determine a second intensity (Ivv) of the second component, in particular where the second intensity (Ivv) is a mean of the intensity of the second component;

wherein the first component (Ivh) is polarized along a first polarization direction;

wherein the second component (Ivv) is polarized along a second polarization direction;

wherein the second polarization direction and the first polarization direction are arranged with respect to each other in an angle of $45^0$ or more, in particular essentially $90^0$;

wherein the electromagnetic radiation is coherent and/or polarized;

wherein an incident polarization direction of the electromagnetic radiation and the second polarization direction have a fixed relationship;

wherein the polarizability (a), in particular the polarizability tensor, is anisotropic.

12. A method of analyzing sample particles, in particular particles in a solvent, of a sample, by dynamic light scattering, the method comprising:

illuminating the sample (220) with electromagnetic radiation (211), thereby generating a scattered signal;

detecting (101) a first component (Ivh) of the scattered signal;

detecting (102) a second component (Ivv) of the scattered signal;

determining (110) the depolarization ratio (Ivh/Ivv) of the sample (220) based on the detected second component (Ivv) and the detected first component (Ivh);

calculating (122) a polarizability (a) associated with the sample (220);

determining (120) a shape characteristic (p) of the sample particles based on the depolarization ratio (Ivh/Ivv) and the polarizability (a); and

determining (130) a size characteristic being a length (L) of the sample particles based on the determined shape characteristic (p).

**Patentansprüche**

1. Vorrichtung (100), die als eine dynamische Lichtstreuvorrichtung konfiguriert ist, zum Analysieren von Partikeln einer Probe (220), wobei die Vorrichtung (100) Folgendes aufweist:

eine elektromagnetische Strahlungsquelle (210) zum Beleuchten der Probe (220) mit elektromagnetischer Strahlung (211), um dadurch ein gestreutes Signal zu erzeugen;

einen Detektor (230) zum Detektieren

einer ersten Komponente (Ivh) des gestreuten Signals (101) und

einer zweiten Komponente (Ivv) des gestreuten Signals (102); und

eine Steuervorrichtung (250), die konfiguriert ist zum:

Bestimmen (110) des Depolarisationsverhältnisses (Ivh/Ivv) der Probe (220) basierend auf der detektierten ersten Komponente (Ivv) und der detektierten zweiten Komponente (Ivv);

Berechnen (122) einer Polarisierbarkeit ($\alpha$), die mit der Probe (220) assoziiert ist;

Bestimmen (120) einer Formcharakteristik (p) der Probenpartikel basierend auf dem Depolarisationsverhältnis (Ivh/Ivv) und der Polarisierbarkeit ($\alpha$); und

Bestimmen (130) einer Größencharakteristik, die eine Länge (L) der Probenpartikel ist, basierend auf der bestimmten Formcharakteristik (p).

2. Vorrichtung (100) nach Anspruch 1, wobei die Steuervorrichtung (250) ferner konfiguriert ist zum:
Annehmen (125) eines Formmodells der Probenpartikel, insbesondere einer abgeflachten Form oder einer länglichen Form.

3. Vorrichtung (100) nach einem der vorhergehenden Ansprüche,
wobei die erste Komponente (Ivv) und die zweite Komponente (Ivh) aus dem gleichen Winkel oder aus verschiedenen Winkeln detektiert werden.

4. Vorrichtung (100) nach einem der vorhergehenden Ansprüche,

wobei die Polarisierbarkeit ($\alpha$) basierend auf einer Materialkonstante der Probe berechnet wird, insbesondere mindestens einem von einem Brechungsindex der Probe, einem Absorptionsindex der Probe, einer Dielektrizitätskonstante der Probe, insbesondere der Probenpartikel und/oder des Lösungsmittels.

5. Vorrichtung (100) nach einem der vorhergehenden Ansprüche,

   wobei die Polarisierbarkeit ($\alpha$) einen Polarisierbarkeitstensor aufweist, insbesondere
   wobei der Polarisierbarkeitstensor eine Dimensionalität aufweist, insbesondere wobei die Dimensionalität 0 oder höher ist, insbesondere 1 oder höher, insbesondere 2 oder höher.

6. Vorrichtung (100) nach einem der vorhergehenden Ansprüche,
   wobei die Bestimmung (120) der Formcharakteristik (p) frei von einer Referenzmessung ist, insbesondere frei von experimentell bestimmten Referenzdaten, die mit der Probe assoziiert sind, und/oder frei von einer Referenzprobe.

7. Vorrichtung (100) nach einem der vorhergehenden Ansprüche, wobei die Bestimmung (120) der Formcharakteristik (p) Folgendes aufweist:

   Berechnen einer Formcharakteristik-Bestimmungskurve (150), und
   Korrelieren des berechneten Depolarisationsverhältnisses (Ivh/Ivv) mit der Formcharakteristik-Bestimmungskurve (150).

8. Vorrichtung (100) nach Anspruch 7,
   wobei die Berechnung der Formcharakteristik-Bestimmungskurve (150) analytisch basierend auf einem theoretischen Modell erfolgt, insbesondere frei von experimentellen Referenzdaten.

9. Vorrichtung (100) nach einem der vorhergehenden Ansprüche, wobei die Bestimmung (130) der Größencharakteristik Folgendes aufweist:
   Messen (131) einer polarisationsselektiven statistischen Eigenschaft des gestreuten Signals ($g_{vh}$), insbesondere unter Verwendung von depolarisierter dynamischer Lichtstreuung, der ersten Komponente (Ivh), insbesondere ausschließlich der ersten Komponente (Ivh);

   insbesondere
   wobei die Bestimmung (130) der Größencharakteristik ferner Folgendes aufweist:
   Bestimmen einer Kohärenzzeit der Intensitätsschwankungen des gestreuten Signals,
   insbesondere Anpassen (132) einer Abklingrate ($\Gamma$) basierend auf der gemessenen polarisationsselektiven statistischen Eigenschaft, insbesondere der depolarisierten Korrelationsfunktion ($g_{vh}$).

10. Vorrichtung (100) nach einem der vorhergehenden Ansprüche,
    wobei die Bestimmung (130) der Größencharakteristik auf mindestens einem von Folgendem basiert: der angepassten Abklingrate ($\Gamma$), der bestimmten Formcharakteristik (p), einem hydrodynamischen Diffusionsmodell, einer Viskosität eines Probenlösungsmittels.

11. Vorrichtung (100) nach einem der vorhergehenden Ansprüche, die ferner mindestens eines der folgenden Merkmale aufweist:

    wobei die Formcharakteristik ein Aspektverhältnis aufweist;
    wobei die Probenpartikel in einem Lösungsmittel angeordnet sind, insbesondere in einer Dispersion oder einer Suspension;
    wobei die Vorrichtung konfiguriert ist zum Bestimmen einer ersten Intensität (Ivh) der ersten Komponente, insbesondere wobei die erste Intensität ein Mittelwert der Intensität der ersten Komponente ist;
    wobei die Vorrichtung konfiguriert ist zum Bestimmen einer zweiten Intensität (Ivv) der zweiten Komponente, insbesondere wobei die zweite Intensität (Ivv) ein Mittelwert der Intensität der zweiten Komponente ist;
    wobei die erste Komponente (Ivh) entlang einer ersten Polarisationsrichtung polarisiert ist;
    wobei die zweite Komponente (Ivv) entlang einer zweiten Polarisationsrichtung polarisiert ist;
    wobei die zweite Polarisationsrichtung und die erste Polarisationsrichtung in einem Winkel von 45° oder mehr, insbesondere im Wesentlichen 90°, zueinander angeordnet sind;
    wobei die elektromagnetische Strahlung kohärent und/oder polarisiert ist;
    wobei eine einfallende Polarisationsrichtung der elektromagnetischen Strahlung und der zweiten Polarisationsrichtung ein festes Verhältnis aufweisen;
wobei die Polarisierbarkeit ($\alpha$), insbesondere der Polarisierbarkeitstensor, anisotrop ist.

12. Verfahren zum Analysieren von Probenpartikeln, insbesondere Partikeln in einem Lösungsmittel, einer Probe durch dynamische Lichtstreuung, wobei das Verfahren Folgendes aufweist:

Beleuchten der Probe (220) mit elektromagnetischer Strahlung (211), um dadurch ein gestreutes Signal zu erzeugen;
Detektieren (101) einer ersten Komponente (Ivh) des gestreuten Signals;
Detektieren (102) einer zweiten Komponente (Ivv) des gestreuten Signals;
Bestimmen (110) des Depolarisationsverhältnisses (Ivh/Ivv) der Probe (220) basierend auf der detektierten zweiten Komponente (Ivv) und der detektierten ersten Komponente (Ivh);
Berechnen (122) einer Polarisierbarkeit ($\alpha$), die mit der Probe (220) assoziiert ist;
Bestimmen (120) einer Formcharakteristik (p) der Probenpartikel basierend auf dem Depolarisationsverhältnis (Ivh/Ivv) und der Polarisierbarkeit ($\alpha$); und
Bestimmen (130) einer Größencharakteristik, die eine Länge (L) der Probenpartikel ist, basierend auf der bestimmten Formcharakteristik (p).

**Revendications**

1. Dispositif (100), configuré comme un dispositif de diffusion de lumière dynamique, pour analyser des particules d'un échantillon (220), le dispositif (100) comprenant :

une source de rayonnement électromagnétique (210) pour éclairer l'échantillon (220) avec un rayonnement électromagnétique (211) afin de générer ainsi un signal diffusé ;
un détecteur (230) pour détecter une première composante (Ivh) du signal diffusé (101), et une seconde composante (Ivv) du signal diffusé (102) ; et
un dispositif de commande (250) configuré pour :

déterminer (110) le rapport de dépolarisation (Ivh/Ivv) de l'échantillon (220) sur la base de la première composante détectée (Ivv) et de la seconde composante détectée (Ivh) ;
calculer (122) une polarisabilité ($\alpha$) associée à l'échantillon (220) ;
déterminer (120) une caractéristique de forme ($\rho$) des particules d'échantillon sur la base du rapport de dépolarisation (Ivh/Ivv) et de la polarisabilité ($\alpha$) ; et
déterminer (130) une caractéristique de taille étant une longueur (L) des particules d'échantillon sur la base de la caractéristique de forme déterminée ($\rho$).

2. Dispositif (100) selon la revendication 1, dans lequel le dispositif de commande (250) est en outre configuré pour :
assumer (125) un modèle de forme des particules d'échantillon, en particulier une forme oblate ou une forme prolate.

3. Dispositif (100) selon l'une quelconque des revendications précédentes, dans lequel la première composante (Ivv) et la seconde composante (Ivh) sont détectées sous le même angle ou sous des angles différents.

4. Dispositif (100) selon l'une des revendications précédentes, dans lequel la polarisabilité ($\alpha$) est calculée sur la base d'une constante de matériau de l'échantillon, en particulier d'au moins un parmi un indice de réfraction de l'échantillon, un indice d'absorption de l'échantillon, une constante diélectrique de l'échantillon, en particulier des particules d'échantillon et/ou du solvant.

5. Dispositif (100) selon l'une quelconque des revendications précédentes, dans lequel la polarisabilité ($\alpha$) comprend un tenseur de polarisabilité, en particulier dans lequel le tenseur de polarisabilité présente une dimensionnalité, plus particulièrement dans lequel ladite dimensionnalité est de 0 ou plus, en particulier de 1 ou plus, plus particulièrement de 2 ou plus.

6. Dispositif (100) selon l'une des revendications précédentes, dans lequel la détermination (120) de la caractéristique de forme ($\rho$) est exempte d'une mesure de référence, en particulier exempte de données de référence déterminées expérimentalement associées à l'échantillon et/ou exempte d'un échantillon de référence.

**7.** Dispositif (100) selon l'une quelconque des revendications précédentes, dans lequel la détermination (120) de la caractéristique de forme (ρ) comprend les étapes consistant à :

calculer une courbe de détermination de caractéristique de forme (150), et
corréler le rapport de dépolarisation calculé (Ivh/Ivv) avec la courbe de détermination de caractéristique de forme (150).

**8.** Dispositif (100) selon la revendication 7,
dans lequel le calcul de la courbe de détermination de caractéristique de forme (150) est effectué de manière analytique sur la base d'un modèle théorique, en particulier exempt de données de référence expérimentales.

**9.** Dispositif (100) selon l'une quelconque des revendications précédentes, lequel la détermination (130) de la caractéristique de taille comprend l'étape consistant à :

mesurer (131) une propriété statistique sélective de polarisation du signal diffusé ($g_{vh}$), en particulier en utilisant la diffusion de lumière dynamique dépolarisée, de la première composante (Ivh), en particulier exclusivement de la première composante (Ivh) ;
en particulier
dans lequel la détermination (130) de la caractéristique de taille comprend en outre les étapes consistant à :

déterminer un temps de cohérence des fluctuations d'intensité du signal diffusé,
en particulier ajuster (132) un taux de décroissance (Γ) basé sur la propriété statistique sélective de polarisation mesurée, en particulier la fonction de corrélation dépolarisée ($g_{vh}$).

**10.** Dispositif (100) selon l'une des revendications précédentes,
dans lequel la détermination (130) de la caractéristique de taille est basée sur au moins un parmi : le taux de décroissance ajusté (Γ), la caractéristique de forme déterminée (ρ), un modèle de diffusion hydrodynamique, une viscosité d'un solvant d'échantillon.

**11.** Dispositif (100) selon l'une quelconque des revendications précédentes, comprenant en outre au moins l'une des caractéristiques suivantes :

dans lequel la caractéristique de forme comprend un rapport d'aspect ;
dans lequel les particules d'échantillon sont agencées dans un solvant, en particulier dans une dispersion ou une suspension ;
dans lequel le dispositif est configuré pour déterminer une première intensité (Ivh) de la première composante, en particulier lorsque la première intensité est une moyenne de l'intensité de la première composante ;
dans lequel le dispositif est configuré pour déterminer une seconde intensité (Ivv) de la seconde composante, en particulier lorsque la seconde intensité (Ivv) est une moyenne de l'intensité de la seconde composante ;
dans lequel la première composante (Ivh) est polarisé le long d'une première direction de polarisation ;
dans lequel la seconde composante (Ivv) est polarisée le long d'une seconde direction de polarisation ;
dans lequel la seconde direction de polarisation et la première direction de polarisation sont agencées l'une par rapport à l'autre selon un angle de 45° ou plus, en particulier essentiellement de 90°;
dans lequel le rayonnement électromagnétique est cohérent et/ou polarisé ;
dans lequel une direction de polarisation incidente du rayonnement électromagnétique et la seconde direction de polarisation présentent une relation fixe ;
dans lequel la polarisabilité (α), en particulier le tenseur de polarisabilité, est anisotrope.

**12.** Procédé d'analyse de particules d'échantillon, en particulier de particules dans un solvant, d'un échantillon, par diffusion de lumière dynamique, le procédé comprenant les étapes consistant à :

éclairer l'échantillon (220) avec un rayonnement électromagnétique (211), en générant ainsi un signal diffusé ;
détecter (101) une première composante (Ivh) du signal diffusé ;
détecter (102) une seconde composante (Ivv) du signal diffusé ;
déterminer (110) le rapport de dépolarisation (Ivh/Ivv) de l'échantillon (220) sur la base de la seconde composante détectée (Ivv) et de la première composante détectée (Ivh) ;
calculer (122) une polarisabilité (α) associée à l'échantillon (220) ;
déterminer (120) une caractéristique de forme (ρ) des particules d'échantillon sur la base du rapport de dépolarisation (Ivh/Ivv) et de la polarisabilité ($\alpha$) ; et
déterminer (130) une caractéristique de taille étant une longueur (L) des particules d'échantillon sur la base de la caractéristique de forme déterminée ($\rho$).

Fig. 1

EP 4 685 460 B1

gold (n=0.1399+3.702i) in water

Fig. 2A

latex (n=1.59) in water

Fig. 2B

n=0.1

Fig. 2C

n=0.9

Fig. 2D

n=1.5

Fig. 2E

g2 vh 660nm

Fig. 3

Fig. 4

**EP 4 685 460 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10520431 B2
- CN 110927025 A